# EUROPEAN PATENT APPLICATION

(11) **EP 4 617 947 A1**
(43) Date of publication of application: **17.09.2025**
(21) Application number: 24809190.2
(22) Date of filing: 02.02.2024
(51) Int. Cl.: G06K 19/077

(54) **RFID TAG AND TAG MANUFACTURING METHOD**

(71) Applicant: BALOA LTD., Hyogo 6740064 (JP)
(72) Inventor: AOYAMA, Hiroshi, Akashi-city, Hyogo 674-0064 (JP)
(74) Representative: TBK
(86) International application number: PCT/JP2024/003392
(87) International publication number: WO 2025/163874

(57) **Abstract**

An RFID tag (100) includes: a tag substate (1) that has a plate-like shape and has an antenna (2) disposed on a substrate front surface (1a) facing one side (D1a) in its thickness direction (D1); an IC chip (30) at least a part of which is located on the one side (D1a) of the antenna (2) in the thickness direction (D1) and that is connected to the antenna (2); and a cover member (4) that is disposed in the vicinity of the IC chip (30) on the substrate front surface (1a), wherein an end of the cover member (4) on the one side (D1a) in the thickness direction (D1) is located at the same position as an end of the IC chip (30) on the one side (D1a) in the thickness direction (D1), or located on the one side (D1a), in the thickness direction (D1), of the end of the IC chip (30) on the one side (D1a) in the thickness direction (D1).

## Description

### Technical Field

The present invention relates to an RFID tag and a method for manufacturing the tag.

### Background Art

A technique for wirelessly reading and writing data using radio waves, called RFID (Radio Frequency Identification), has heretofore been known. Currently, this type of technology is used in various settings. For example, to significantly reduce the effort required for product inventory management and checkout procedures at automatic registers, RFID tags in which predetermined information has been written are attached to products, and the information in the RFID tags is read using dedicated readers.

Among RFID tags, there are active tags equipped with a battery, passive tags that are batteryless and whose IC chips mounted thereon operate with radio waves from readers, and semi-active tags combining the features of both active and passive tags. Passive tags do not need maintenance such as battery replacement, and can be reduced in size and price. For such reasons, passive tags have recently been used more often in logistics settings such as inventory management. In particular, tags that use UHF-band (860 to 960 MHz) radio waves are attracting attention because of longer communication distances and lower prices.

This type of RFID tag is described in PTL 1, for example, and is constituted by mounting an IC chip on a tag substrate with an antenna formed on the surface.

### Citation List

### Patent Literature

PTL 1: Japanese Patent Application Laid-Open No. 2013-92972

### Summary of Invention

### Technical Problem

Incidentally, in conventional RFID tags such as described in PTL 1, an inlay with an IC chip having a thickness of 100 µm or so mounted on the substrate surface is inserted into a tag or label made of paper or a film. Due to such a structure, the IC portion always protrudes by 100 µm or so from the outer shape. When the RFID tags are attached to pallets, reusable containers, or the like and used in logistics settings, for example, it is conceivable that the IC chips can be easily damaged since compressive load concentrates on the IC chips in the event of collision of the protrusions with other pallets or the like.

In view of this, the present invention provides an RFID tag that can avoid load concentration on the IC chip and improve durability, and a tag manufacturing method for manufacturing the RFID tag.

### Solution to Problem

An RFID tag according to an aspect of the present invention is an RFID tag to be attached to a target object and enable identification of the target object through wireless data communication, the RFID tag including: a tag substate that has a plate-like shape and has an antenna disposed on a substrate front surface facing one side in a thickness direction thereof; an IC chip at least a part of which is located on the one side of the antenna in the thickness direction and that is connected to the antenna; and a cover member that is disposed in a vicinity of the IC chip on the substrate front surface, wherein an end of the cover member on the one side in the thickness direction is located at a same position as an end of the IC chip on the one side in the thickness direction, or located on the one side, in the thickness direction, of the end of the IC chip on the one side in the thickness direction.

In the above-described RFID tag, the cover member may have a plate-like shape, and an entire cover surface of the cover member facing the one side in the thickness direction may be located at the same position as the end of the IC chip on the one side in the thickness direction, or located on the one side, in the thickness direction, of the end of the IC chip on the one side in the thickness direction.

In the above-described RFID tag, the cover member may include a first cover portion disposed on one side of the IC chip in a first lateral direction along a surface direction of the substrate front surface, and a second cover portion disposed on the other side of the IC chip in the first lateral direction and away from the first cover portion, and a slit-like portion where the IC chip is disposed may be formed between the first cover portion and the second cover portion, the slit-like portion extending in a second lateral direction intersecting the first lateral direction and along the surface direction.

In the above-described RFID tag, the cover member may have a chip placement hole that penetrates the cover member in the thickness direction, the IC chip being disposed inside the chip placement hole.

The above-described RFID tag may further include: a chip holding member that holds the IC chip from the one side in the thickness direction; and a chip-antenna connection member that is disposed on a surface of the chip holding member facing the other side in the thickness direction, and is connected to the IC chip from the one side in the thickness direction and to the antenna from the one side in the thickness direction, wherein the end of the cover member on the one side in the thickness direction may be located at a same position as an end of the chip holding member on the one side in the thickness direction, or located on the one side, in the thickness direction, of the end of the chip holding member on the one side in the thickness direction.

In the above-described RFID tag, the chip-antenna connection member may include an antenna connection portion that extends in the surface direction of the substrate front surface and that becomes a portion opposed to the antenna, the chip holding member may have a connection portion overlapping portion that is stacked on the one side of the antenna connection portion in the thickness direction and extends in the surface direction of the substrate front surface, and the cover member may be located so that the cover member and the antenna sandwich the antenna connection portion and the connection portion overlapping portion therebetween.

In the above-described RFID tag, the tag substrate may be formed of a material having flexibility capable of elastic bending deformation at least in the thickness direction, and the RFID tag may further include an adhesive layer that is stacked on a substrate rear surface of the tag substrate opposite to the substrate front surface and is capable of attaching the tag substrate to the target object.

A tag manufacturing method according to an aspect of the present invention is a tag manufacturing method for manufacturing the foregoing RFID tag, the tag manufacturing method including the steps of: unrolling a sheet-like cover member material from a roll of the cover member material, where the cover member material is used to form the cover member; cutting the unrolled cover member material along an unrolling direction; attaching a one-side portion and an other-side portion of the cut cover member material to a tag substrate group in which a plurality of tag substrates equipped with IC chips are arranged in a conveyance direction, the one-side portion and the other-side portion being arranged in a conveyance intersecting direction intersecting the conveyance direction to avoid the IC chips; and after the cover member material is attached, separating the individual tag substrates in the tag substrate group in the conveyance direction to form the first cover portion and the second cover portion on each of the tag substrates.

### Advantageous Effects of Invention

The RFID tag described above can avoid load concentration on the IC chip and improve durability. The tag manufacturing method described above can manufacture an RFID tag that can avoid load concentration on the IC chip and improve durability.

### Brief Description of Drawings

[Fig. 1] Fig. 1 is a plan view of an RFID tag according to an embodiment of the present invention, seen from an IC-chip side.
[Fig. 2] Fig. 2 is a longitudinal cross-sectional view of the RFID tag, showing a I-I cross section of Fig. 1.
[Fig. 3] Fig. 3 is a plan view of the RFID tag seen from the IC-chip side with a front-side outer layer portion removed to expose a cover member.
[Fig. 4] Fig. 4 is a schematic diagram showing a method for manufacturing the RFID tag.
[Fig. 5] Fig. 5 is a plan view of an RFID tag according to a first modification of the embodiment of the present invention, seen from the IC-chip side with the front-side outer layer portion removed to expose the cover member.
[Fig. 6] Fig. 6 is a longitudinal cross-sectional view of an RFID tag according to a second modification of the embodiment of the present invention.

### Description of Embodiments

Hereinafter, an RFID tag 100 according to an embodiment of the present invention will be described.

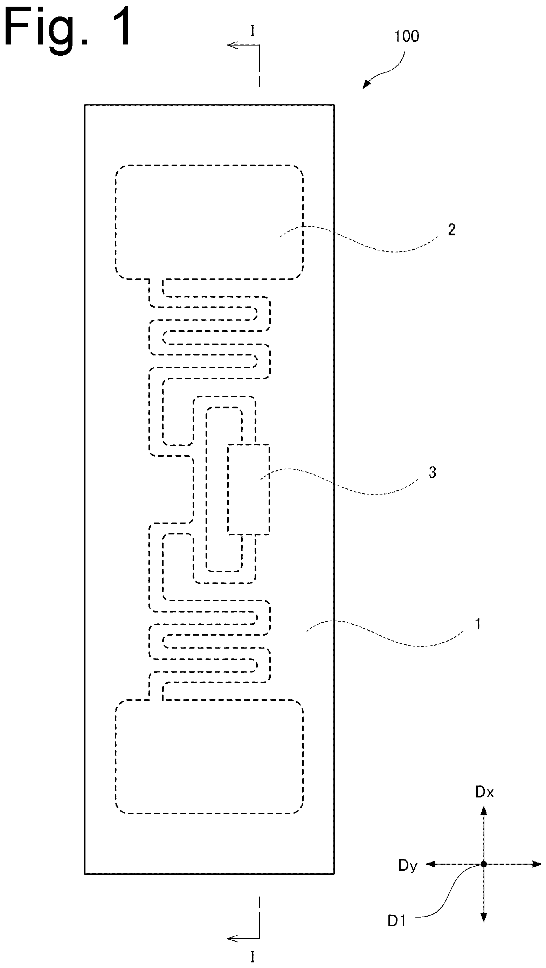

As shown in Fig. 1, the RFID tag 100 has a rectangular plate-like shape (sheet-like shape) with a thickness of at least 50 µm greater than that of an IC chip 30, for example, which will be described below. The RFID tag 100 is a device to be attached to a not-shown target object and enable identification, management, and the like of the target object through wireless data communication with a dedicated reader-writer. In the present embodiment, the RFID tag 100 is a passive tag. The RFID tag 100 has flexibility capable of elastic deformation at least in its thickness direction, as well as robustness (impact resistance).

The RFID tag 100 according to the present embodiment has a greater dimension in a width direction orthogonal to its thickness direction than in a depth direction orthogonal to (intersecting) the thickness direction and the width direction. The width direction of the RFID tag 100 will hereinafter be referred to as a first lateral direction Dx, and the depth direction will be referred to as a second lateral direction Dy.

### (Overall Configuration)

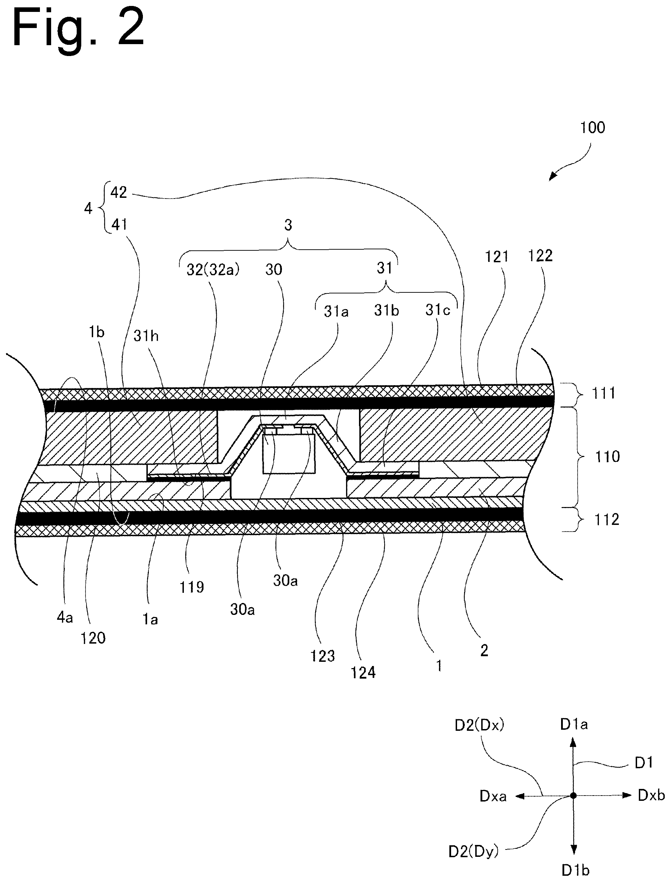

Specifically, as shown in Fig. 2, the RFID tag 100 includes an inlay 110 having a plate-like shape (sheet-like shape), a front-side outer layer portion 111 stacked on one side of the inlay 110, and a rear-side outer layer portion 112 stacked on the other side of the inlay 110.

### (Inlay)

The inlay 110 includes a tag substrate 1 having a plate-like shape (sheet-like shape), and a chip unit 3 and a cover member 4 disposed on the tag substrate 1.

The tag substrate 1 is formed of a material having flexibility capable of elastic bending deformation at least in its thickness direction D1. Examples of materials suitably used for the tag substrate 1 include resins such as polyimide, PET, PP, and PVC with excellent flexibility, heat resistance, and electrical insulation. An antenna 2 is disposed on a substrate front surface 1a facing one side D1a in the thickness direction D1 of the tag substrate 1.

The antenna 2 is, for example, formed by printing a conductive ink on the substrate front surface 1a. However, the antenna 2 can also be formed using various methods, including etching, metal foil attachment, and vapor deposition. The pattern of the antenna 2 is not particularly limited.

The chip unit 3 includes the IC chip 30, a chip holding member 31 that holds the IC chip 30, and chip-antenna connection members 32 interposed between the IC chip 30 and the chip holding member 31.

Terminals 30a of the IC chip 30 are disposed on the surface of the IC chip 30 facing the one side D1a in the thickness direction D1. The IC chip 30 operates by receiving radio waves from the reader-writer. In the present embodiment, at least a part of the IC chip 30 is located on the one side D1a of the antenna 2 in the thickness direction D1.

The chip holding member 31 is intended to mount the IC chip 30. For example, the chip holding member 31 is formed of a resin film such as a polyimide film or a PET film in a sheet-like shape, and holds the IC chip 30 from the one side D1a in the thickness direction D1. In the present embodiment, the chip holding member 31, when seen in a cross section shown in Fig. 2 (cross section orthogonal to the second lateral direction Dy), includes: a chip opposing portion 31a that extends in a surface direction D2 of the substrate front surface 1a of the tag substrate 1 on the one side D1a of the IC chip 30 in the thickness direction D1; a pair of side portions 31b that extend from the chip opposing portion 31a to the other side D1b in the thickness direction D1 along respective side surfaces of the IC chip 30 facing the width direction that is the first lateral direction Dx; and connection portion overlapping portions 31c that extend from the respective side portions 31b in the surface direction D2 away from the IC chip 30 and are disposed on the antenna 2.

The chip-antenna connection members 32 are disposed on surfaces 31h of the chip holding member 31 facing the other side D1b in the thickness direction D1, and electrically connected to the terminals 30a of the IC chip 30 from the one side D1a in the thickness direction D1. For example, like the antenna 2, the chip-antenna connection members 32 are formed on the surfaces 31h of the chip holding member 31 by various methods such as printing of a conductive ink, etching, metal foil attachment, and vapor deposition. The chip-antenna connection members 32 are disposed over the entire surfaces 31h of the chip holding member 31, and include antenna connection portions 32a where the connection portion overlapping portions 31c of the chip holding member 31 are stacked on the one side D1a in the thickness direction D1. The antenna connection portions 32a are portions that extend in the surface direction D2 of the substrate front surface 1a of the tag substrate 1 and opposed to the antenna 2. In the present embodiment, an insulating adhesive 119 is interposed between the antenna connection portions 32a and the antenna 2. The antenna connection portions 32a and the antenna 2 are magnetically coupled with each other so that the IC chip 30 and the reader-writer can communicate with each other via the antenna 2. The antenna connection portions 32a and the antenna 2 may be electrically connected using a conductive adhesive to ensure conductivity.

The cover member 4 desirably has a thickness greater than that of the IC chip 30. The thickness is 60 µm or more and 200 µm or less. For example, if the IC chip 30 has a thickness of 100 µm, the cover member 4 desirably has a plate-like shape (sheet-like shape) of 150 µm in thickness and is disposed in the vicinity of the IC chip 30 on the substrate front surface 1a. The cover member 4 is formed of resins such as polyimide, PET, PP, and PVC, for example, with excellent flexibility, heat resistance, and electrical insulation, and covers substantially the entire substrate front surface 1a of the tag substrate 1. An entire cover surface 4a of the cover member 4 facing the one side D1a in the thickness direction D1 is located on the one side D1a of the IC chip 30 in the thickness direction D1. The entire cover surface 4a is also located on the one side D1a of the chip holding member 31 in the thickness direction D1. In other words, the protruding height of the cover member 4 to the one side D1a in the thickness direction D1 with respect to the substrate front surface 1a of the tag substrate 1 is greater than that of the IC chip 30. For example, a silicon-based adhesive 120 having waterproof properties, heat resistance, elasticity, electrical insulation, and the like is interposed between the cover member 4 and the antenna 2.

The cover member 4 includes a first cover portion 41 located on one side Dxa of the IC chip 30 in the first lateral direction Dx and a second cover portion 42 located on the other side Dxb of the IC chip 30 in the first lateral direction Dx.

The first cover portion 41 and the antenna 2 sandwich the antenna connection portion 32a of a chip-antenna connection member 32 and a connection portion overlapping portion 31c of the chip holding member 31 therebetween on the one side Dxa of the IC chip 30 in the first lateral direction Dx.

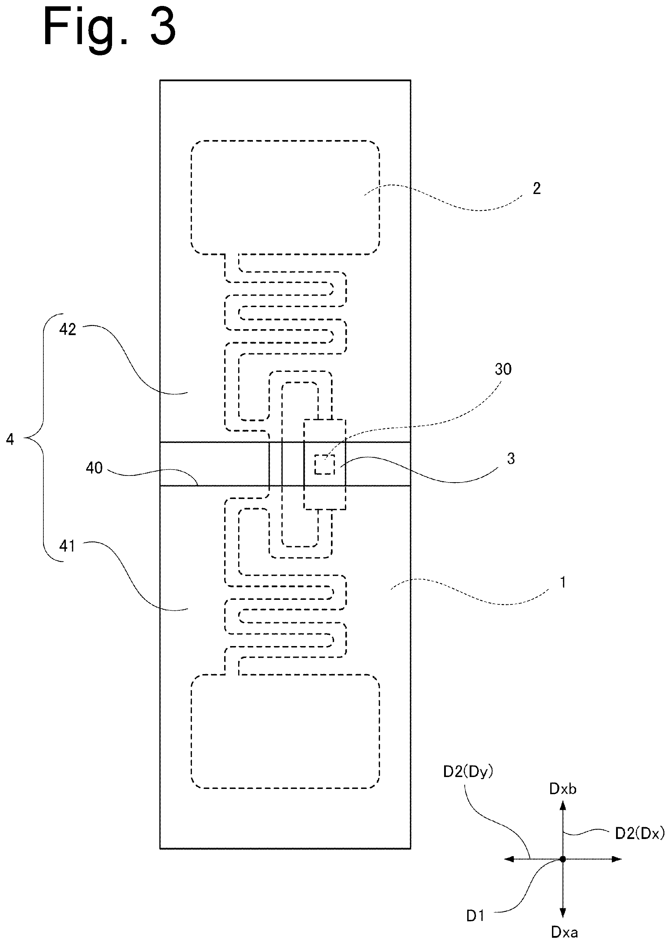

The second cover portion 42 is located at a position away from the first cover portion 41 in the first lateral direction Dx. The second cover portion 42 and the antenna 2 sandwich the antenna connection portion 32a of a chip-antenna connection member 32 and a connection portion overlapping portion 31c of the chip holding member 31 therebetween on the other side Dxb of the IC chip 30 in the first lateral direction Dx. As shown in Fig. 3, a slit-like portion 40 where the IC chip 30 is disposed is formed to extend in the second lateral direction Dy between the first cover portion 41 and the second cover portion 42.

### (Front-Side Outer Layer Portion)

Returning to Fig. 2, the front-side outer layer portion 111 has a plate-like shape (sheet-like shape) and is stacked on one side of the cover member 4 in the thickness direction D1. The front-side outer layer portion 111 includes an outermost layer 121 formed of a material having flexibility capable of elastic bending deformation at least in the thickness direction D1, and an adhesive layer 122 formed of an adhesive and interposed between the outermost layer 121 and the cover surface 4a of the cover member 4. For example, a composite material made of paper and a resin is suitably used as the material of the outermost layer 121.

### (Rear-Side Outer Layer Portion)

The rear-side outer layer portion 112 has a plate-like shape (sheet-like shape) and is stacked on a substrate rear surface 1b of the tag substrate 1 opposite to the substrate front surface 1a of the tag substrate 1. The rear-side outer layer portion 112 includes an adhesive layer 123 that is disposed on the substrate rear surface 1b and capable of attaching the tag substrate 1 to the target object, and release paper 124 that protects the adhesive layer 123. The RFID tag 100 according to the present embodiment is thus attached to the target object for use.

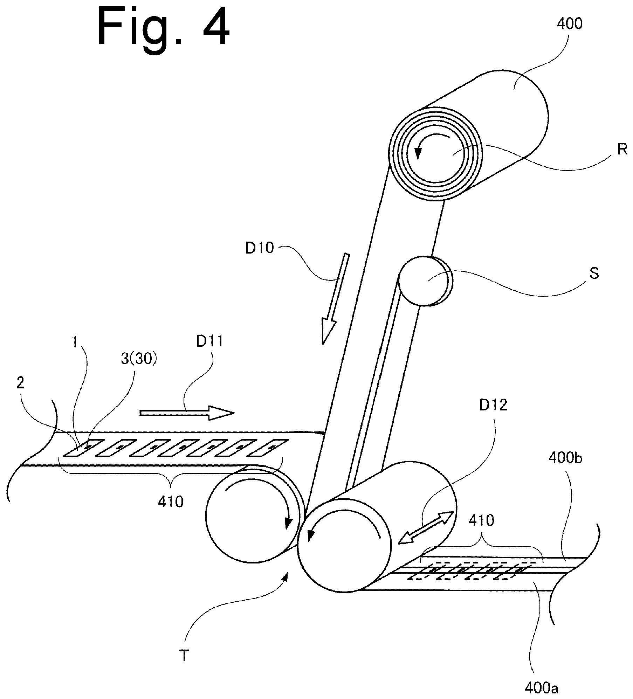

Next, a method for manufacturing the above-described RFID tag 100 will be described with reference to Fig. 4.

Initially, a step of unrolling a sheet-like cover member material 400 from a roll R of the cover member material 400, where the cover member material 400 is used to form the cover member 4, is performed.

Next, a step of cutting the unrolled cover member material 400 along an unrolling direction D10 using a slitter S is performed.

Then, in a state where a tag substrate group 410 in which a plurality of tag substrates 1 equipped with antennas 2 and chip units 3 are arranged in a conveyance direction D11 is being conveyed by a conveyance device T, a step of attaching a one-side portion 400a and an other-side portion 400b of the cover member material 400, cut and separated by the slitter S, with the one-side portion 400a and the other-side portion 400b arranged in a conveyance intersecting direction D12 intersecting the conveyance direction D11 to avoid the IC chips 30 of the chip unit 3 is performed.

After the cover member material 400 is attached to the tag substrate group 410, a step of attaching the front-side outer layer portion 111 and the rear-side outer layer portion 112 (see Fig. 2) to the tag substrate group 410 and separating the individual tag substrates 1 in the tag substrate group 410 in the conveyance direction D11 is performed. RFID tags 100 with the first cover portions 41 and the second cover portions 42 (see Fig. 3) on each tag substrate 1 are thereby manufactured.

### (Operation and Effects)

According to the RFID tag 100 of the present embodiment described above, the cover member 4 of which the cover surface 4a is located on the one side D1a of the IC chip 30 in the thickness direction D1 is disposed in the vicinity of the IC chip 30 on the substrate front surface 1a. Thus, if an object comes into contact with the RFID tag 100 from the one side D1a in the thickness direction D1, the compressive load from this object can be received by the cover surface 4a of the cover member 4. This configuration prevents the entire load of the object from concentrating on the IC chip 30, and can avoid damage to the IC chip 30.

In particular, in the present embodiment, the cover surface 4a of the cover member 4 is located on the one side D1a of the chip holding member 31 in the thickness direction D1. This configuration can prevent the entire load of the object from concentrating on the chip holding member 31, and can avoid damage to the entire chip unit 3 as well.

Forming the slit-like portion 40 in the cover member 4 and disposing the IC chip 30 in the slit-like portion 40 can allow for easy disposition of the cover member 4 in the vicinity of the IC chip 30.

The cover member 4 and the antenna 2 sandwich the antenna connection portions 32a of the chip-antenna connection members 32 and the connection portion overlapping portions 31a of the chip holding member 31 therebetween. When a compressive load acts on the RFID tag 100 in the thickness direction D1, the cover member 4 therefore undergoes force in the direction of pressing the chip-antenna connection member 32 against the antenna 2. As a result, even if a compressive load acts on the RFID tag 100, damage that may cause a disconnection between the IC chip 30 and the antenna 2 can be avoided.

Having the adhesive layer 122, the RFID tag 100 is attached to the target object for use. For example, when the RFID tag 100 is attached to a side surface of a pallet or reusable container and used in logistics settings, other pallets or reusable containers or a working machine such as a forklift can accidentally come into contact with the RFID tag 100. Even in such a case, the cover member 4 can prevent damage to the IC chip 30.

Moreover, the RFID tag 100 with the foregoing configuration can be manufactured not just by techniques such as resin molding but by stacking paper or resin film layers. The RFID tag 100 can thus be manufactured at high speed. This provides many advantages including mass producibility and cost reduction through mass production.

The present invention is not limited to the foregoing embodiment, and it will be understood that various modifications can be made without departing from the gist of the present invention.

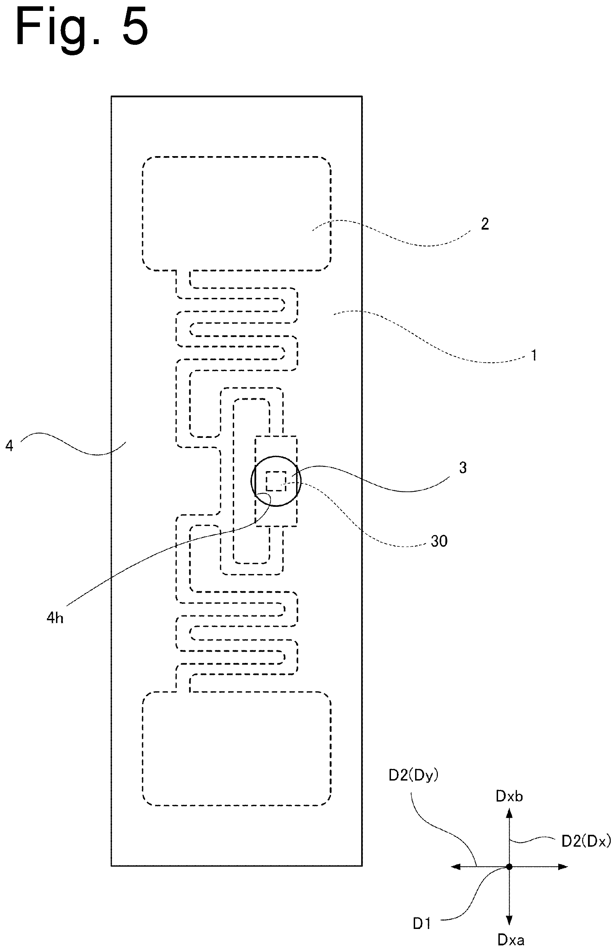

For example, as shown in Fig. 5, the cover member 4 may be integrally formed instead of being separated between the foregoing first and second cover portions 41 and 42. In such a case, the cover member 4 has a chip placement hole 4h that penetrates the cover member 4 in the thickness direction D1 and where the IC chip 30 is disposed inside.

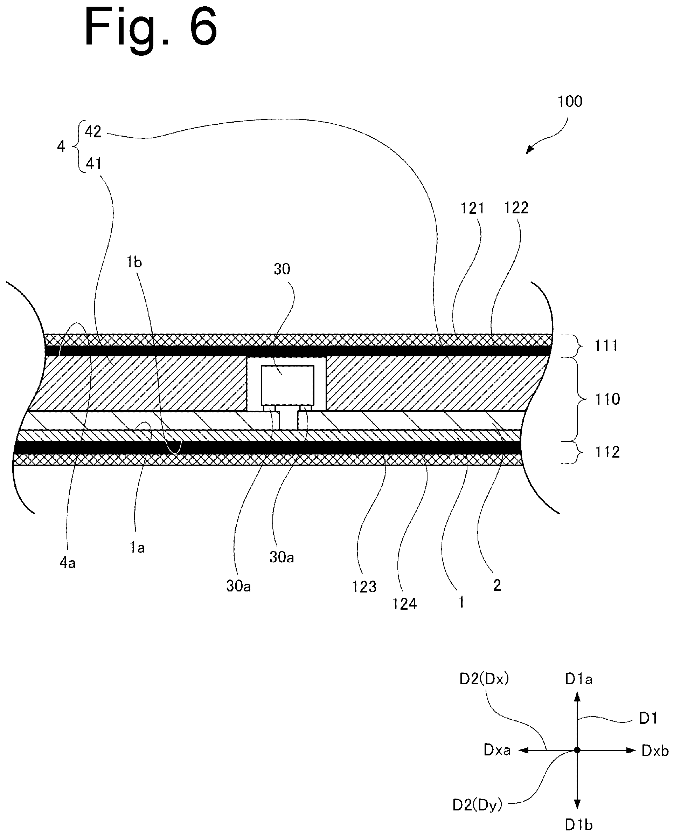

As shown in Fig. 6, the RFID tag 100 does not necessarily need to include the chip unit 3. The terminals 30a of the IC chip 30 may be disposed on the surface of the IC chip 30 facing the other side D1b in the thickness direction D1, and directly connected to the antenna 2.

Moreover, the entire cover surface 4a of the cover member 4 does not necessarily need to be located on the one side D1a of the IC chip 30 in the thickness direction D1. It is sufficient for at least a part of the cover member 4, or more specifically, the end of the cover member 4 on the one side D1a in the thickness direction D1 to be located on the one side D1a of the IC chip 30 or the chip holding member 31 in the thickness direction D1. Alternatively, the entire cover surface 4a of the cover member 4 may be located at the same position as the end of the IC chip 30 or the chip holding member 31 on the one side D1a in the thickness direction D1. The end of the cover member 4 on the one side D1a in the thickness direction D1 may be located at the same position as the end of the IC chip 30 or the chip holding member 31 on the one side D1a in the thickness direction D1. Even in such cases, the load concentration on the IC chip 30 can be avoided.

The rear-side outer layer portion 112 does not necessarily need to include the adhesive layer 123 and the release paper 124, and the RFID tag 100 may be screwed to a target object for use. The RFID tag 100 may be attached to a target object by using both the adhesive layer 123 and the release paper 124 and screwing.

### Industrial Applicability

The RFID tag according to the present invention can avoid load concentration on the IC chip and improve durability. The tag manufacturing method according to the present invention can manufacture an RFID tag that can avoid load concentration on the IC chip and improve durability. Reference Signs List

- 1: tag substrate
- 1a: substrate front surface
- 1b: substrate rear surface
- 2: antenna
- 3: chip unit
- 4: cover member
- 4a: cover surface
- 4h: chip placement hole
- 30: IC chip
- 30a: terminal
- 31: chip holding member
- 31c: connection portion overlapping portion
- 32: chip-antenna connection member
- 32a: antenna connection portion
- 40: slit-like portion
- 41: first cover portion
- 42: second cover portion
- 100: RFID tag
- 110: inlay
- 122: adhesive layer
- 400: cover member material
- 410: tag substrate group
- D1: thickness direction
- D1a: one side
- D1b: other side
- D2: surface direction
- D10: unrolling direction
- D11: conveyance direction
- D12: conveyance intersecting direction
- Dx: first lateral direction
- Dy: second lateral direction

## Claims

1. An RFID tag to be attached to a target object and enable identification of the target object through wireless data communication, the RFID tag comprising:
a tag substate that has a plate-like shape and has an antenna disposed on a substrate front surface facing one side in a thickness direction thereof;
an IC chip at least a part of which is located on the one side of the antenna in the thickness direction and that is connected to the antenna; and
a cover member that is disposed in a vicinity of the IC chip on the substrate front surface, wherein
an end of the cover member on the one side in the thickness direction is located at a same position as an end of the IC chip on the one side in the thickness direction, or located on the one side, in the thickness direction, of the end of the IC chip on the one side in the thickness direction.

2. The RFID tag according to claim 1, wherein:
the cover member has a plate-like shape; and
an entire cover surface of the cover member facing the one side in the thickness direction is located at the same position as the end of the IC chip on the one side in the thickness direction, or located on the one side, in the thickness direction, of the end of the IC chip on the one side in the thickness direction.

3. The RFID tag according to claim 1 or 2, wherein:
the cover member includes
a first cover portion disposed on one side of the IC chip in a first lateral direction along a surface direction of the substrate front surface, and
a second cover portion disposed on the other side of the IC chip in the first lateral direction and away from the first cover portion; and
a slit-like portion where the IC chip is disposed is formed between the first cover portion and the second cover portion, the slit-like portion extending in a second lateral direction intersecting the first lateral direction and along the surface direction.

4. The RFID tag according to claim 1 or 2, wherein the cover member has a chip placement hole that penetrates the cover member in the thickness direction, the IC chip being disposed inside the chip placement hole.

5. The RFID tag according to claim 1 or 2, further comprising:
a chip holding member that holds the IC chip from the one side in the thickness direction; and
a chip-antenna connection member that is disposed on a surface of the chip holding member facing the other side in the thickness direction, and is connected to the IC chip from the one side in the thickness direction and to the antenna from the one side in the thickness direction, wherein
the end of the cover member on the one side in the thickness direction is located at a same position as an end of the chip holding member on the one side in the thickness direction, or located on the one side, in the thickness direction, of the end of the chip holding member on the one side in the thickness direction.

6. The RFID tag according to claim 5, wherein:
the chip-antenna connection member includes an antenna connection portion that extends in the surface direction of the substrate front surface and that becomes a portion opposed to the antenna;
the chip holding member has a connection portion overlapping portion that is stacked on the one side of the antenna connection portion in the thickness direction and extends in the surface direction of the substrate front surface; and
the cover member is located so that the cover member and the antenna sandwich the antenna connection portion and the connection portion overlapping portion therebetween.

7. The RFID tag according to claim 1 or 2, wherein:
the tag substrate is formed of a material having flexibility capable of elastic bending deformation at least in the thickness direction; and
the RFID tag further comprises an adhesive layer that is stacked on a substrate rear surface of the tag substrate opposite to the substrate front surface and is capable of attaching the tag substrate to the target object.

8. A tag manufacturing method for manufacturing the RFID tag according to claim 3, the tag manufacturing method including the steps of:
unrolling a sheet-like cover member material from a roll of the cover member material, where the cover member material is used to form the cover member;
cutting the unrolled cover member material along an unrolling direction;
attaching a one-side portion and an other-side portion of the cut cover member material to a tag substrate group in which a plurality of tag substrates equipped with IC chips are arranged in a conveyance direction, the one-side portion and the other-side portion being arranged in a conveyance intersecting direction intersecting the conveyance direction to avoid the IC chips; and
after the cover member material is attached, separating the individual tag substrates in the tag substrate group in the conveyance direction to form the first cover portion and the second cover portion on each of the tag substrates.
